# EUROPÄISCHE PATENTANMELDUNG

(11) **EP 4 064 490 A1**
(43) Veröffentlichungstag der Anmeldung: **28.09.2022**
(21) Anmeldenummer: 21164237.6
(22) Anmeldetag: 23.03.2021
(51) Int. Cl.: H02H 3/30, H04J 3/06

(54) **DIFFERENTIALSCHUTZGERÄT UND SCHUTZSYSTEM ZUM ÜBERWACHEN VON SCHUTZOBJEKTEN EINES ENERGIEVERSORGUNGSNETZES**

(71) Anmelder: Siemens Aktiengesellschaft, 80333 München (DE)
(72) Erfinder: Matussek, Robert, 10365 Berlin (DE); Groß, Matthias, 13189 Berlin (DE); Kerger, Torsten, 14621 Schönwalde-Glien (DE); Krüger-Gramatte, Sven, 13189 Berlin (DE); Regenbrecht, Andreas, 12619 Berlin (DE); Schumacher, Torsten, 12489 Berlin (DE)

(57) **Zusammenfassung**

Die Erfindung betrifft ein Differentialschutzgerät (40) zum Überwachen eines ersten Schutzobjektes (51a, 61a) eines elektrischen Energieversorgungsnetzes, mit einer Messeinrichtung (41), die dazu eingerichtet ist, an einem Ende des ersten Schutzobjektes (51a, 61a) Messwerte zu erfassen, einer Kommunikationseinrichtung (43), die dazu eingerichtet ist, mit einem an einem anderen Ende des ersten Schutzobjektes (51a, 61a) angeordneten Differentialschutzgerät Messwerte auszutauschen, wobei die Kommunikationseinrichtung (43) eine physikalische Schnittstelle (45) zum Senden und Empfangen der Messwerte aufweist, und einer Auswerteeinrichtung (42), die dazu eingerichtet ist, einen Differenzwert zu bilden und ein einen Fehler hinsichtlich des ersten Schutzobjektes (51a, 61a) angebendes Fehlersignal zu erzeugen, wenn der Differenzwert einen vorgegebenen Schwellenwert überschreitet.

Um Aufwand und Kosten für den Aufbau eines Schutzsystems für mehrere Schutzobjekte zu senken, wird vorgeschlagen, dass das Differentialschutzgerät (40) dazu eingerichtet ist, zumindest ein weiteres Schutzobjekt (51b, 61b) zu überwachen und hinsichtlich jedes weiteren Schutzobjektes (51b, 61b) jeweilige weitere Messwerte auszutauschen, wobei das Senden und Empfangen aller Messwerte über dieselbe physikalische Schnittstelle (45) erfolgt.

Die Erfindung betrifft auch ein Schutzsystem (50, 60) mit einem solchen Differentialschutzgerät (40).

## Beschreibung

Die Erfindung betrifft ein Differentialschutzgerät zum Überwachen eines ersten Schutzobjektes eines elektrischen Energieversorgungsnetzes mit einer Messeinrichtung, die dazu eingerichtet ist, an einem Ende des ersten Schutzobjektes Messwerte (z.B. Strommesswerte oder Ladungsmesswerte) zu erfassen, die den an dem Ende fließenden Strom angeben, mit einer Kommunikationseinrichtung, die dazu eingerichtet ist, mit einem an einem anderen Ende des ersten Schutzobjektes angeordneten Differentialschutzgerät Messwerte auszutauschen, wobei die Kommunikationseinrichtung eine physikalische Schnittstelle zum Senden und Empfangen der Messwerte aufweist, und einer Auswerteeinrichtung, die dazu eingerichtet ist, mit einander zugeordneten Messwerten von beiden Enden des ersten Schutzobjektes einen Differenzstromwert zu bilden und ein einen Fehler hinsichtlich des ersten Schutzobjektes angebendes Fehlersignal zu erzeugen, wenn der Differenzstromwert einen vorgegebenen Schwellenwert überschreitet.

Die Erfindung betrifft auch ein Schutzsystem mit einem solchen Differentialschutzgerät.

Zur Überwachung von Schutzobjekten elektrischer Energieversorgungsnetze (z.B. Hoch- und Mittelspannungsleitungen in Form von Freileitungen oder Kabeln, Transformatoren oder Sammelschienen) wird oft ein Differentialschutzverfahren (nachfolgend der Einfachheit halber als "Differentialschutzverfahren" bezeichnet) eingesetzt. Dabei wird der an den Enden des überwachten Schutzobjektes jeweils fließende Strom oder eine fließende Ladung erfasst und einem Differentialschutzgerät zugeführt. Das Differentialschutzgerät bildet aus den resultierenden Messwerten Differenzwerte, die zur Beurteilung der Betriebssituation der überwachten Primärkomponente herangezogen werden. Im fehlerfreien Fall liegen die Differenzwerte nach der Kirchhoff'schen Knotenpunktregel in einem Bereich nahe Null, da hierbei - vereinfacht gesprochen - der in die Komponente hineinfließende Strom bzw. die hineinfließende Ladung vollständig auch wieder aus ihr herausfließt. Dies gilt auch bei durch die überwachte Leitung fließenden Lastströmen oder bei externen Fehlern, also Fehlern, die außerhalb der überwachten Leitung liegen und deren Fehlerströme durch die Leitung hindurchfließen. Ergeben sich hingegen Differenzwerte, die einen von Null verschiedenen Schwellenwert überschreiten, so lassen diese auf einen fehlerbehafteten Betriebszustand, z.B. einen internen Kurzschluss, schließen. In diesem Fall muss der vorliegende Fehlerstrom durch Öffnen von das Schutzobjekt begrenzenden Schalteinrichtungen, z.B. Leistungsschaltern, unterbrochen werden. Hierfür erzeugt das Differentialschutzgerät ein entsprechendes Fehlersignal, das zur Erzeugung eines Schaltsignals für die jeweilige Schalteinrichtung herangezogen werden kann.

In der Praxis können bei Differentialschutzsystemen auch im fehlerfreien Betrieb Einflüsse auftreten, die scheinbare Differenzstromwerte ungleich Null zur Folge haben. Solche Einflüsse können beispielsweise Messungenauigkeiten, Sättigungserscheinungen der Stromwandler, kapazitive Ladeströme oder eine asynchrone Kommunikation über eine Kommunikationsverbindung sein. Aus diesem Grund kann für die Bewertung der Differenzwerte kein Ansprechwert von Null angenommen werden.

Im Rahmen des Differentialschutzverfahrens müssen die Messwerte oft über eine längere Strecke übertragen werden. In einem solchen Fall ist üblicherweise an jedem der Ende des Schutzobjektes ein separates Differentialschutzgerät angeordnet, das den Differenzwert aus den eigenen (lokal erfassten) Messwerten und den vom anderen Ende des Schutzobjektes empfangenen Messwerten bildet. Bei einem Schutzobjekt mit mehreren Enden, z.B. einer verzweigten Leitung, sind zudem Messwerte von jedem der Enden erforderlich, um das Differentialschutzverfahren korrekt durchführen zu können. Dazu müssen die an den jeweiligen Messstellen lokal erfassten Messwerte zwischen den einzelnen Differentialschutzgeräten übertragen werden.

Zur Beurteilung der Betriebssituation eines Schutzobjektes sind folglich Messwerte von zumindest zwei unterschiedlichen Messstellen an den jeweiligen Enden des überwachten Schutzobjektes erforderlich. Die Messwerte können dabei um weitere Informationen, wie Steuer- und/oder Kontrolldaten angereichert werden. Bei bestehenden Differentialschutzsystemen werden die Messwerte häufig über eine festverdrahtete Punkt-zu-Punkt-Verbindung (z.B. Kupfer- oder Glasfaserleitungen) übertragen, wodurch eine deterministische Übertragung erreicht wird, d.h., die Übertragungszeit der Messwerte ist hauptsächlich abhängig von der Übertragungsstrecke und der Übertragungsart sowie im Wesentlichen konstant.

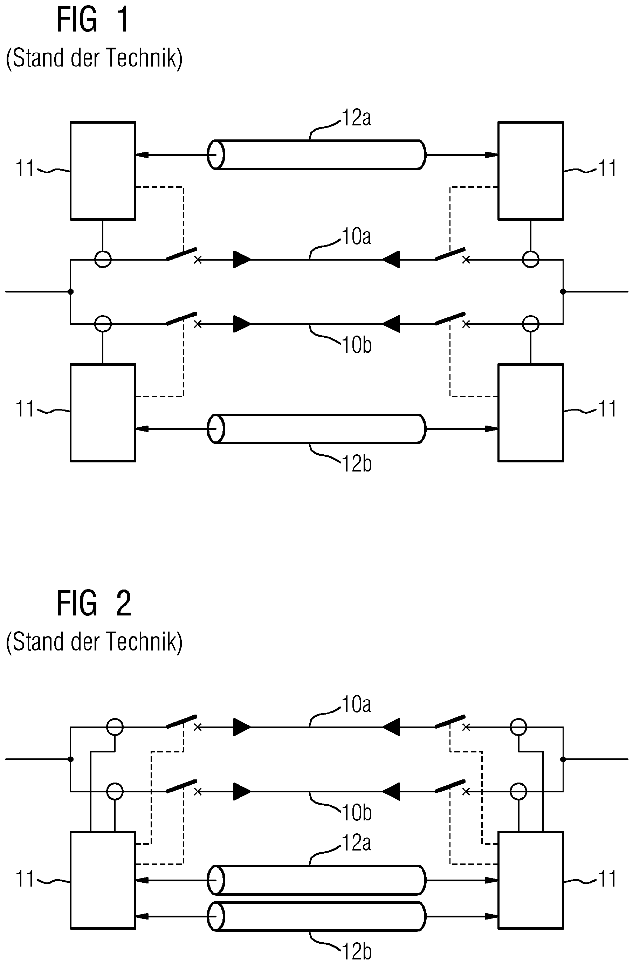

Damit ergibt sich, dass für jedes von einem Differentialschutzgerät überwachte Schutzobjekt eine eigene Übertragungsstrecke zur Übertragung der Messwerte bereitgehalten wird, wofür das Differentialschutzgerät jeweils eine geeignete physikalische Kommunikationsschnittstelle (z.B. eine serielle Schnittstelle oder eine optische oder elektrische Ethernet-Schnittstelle) bereitstellen muss. Beispiele für den Aufbau bekannter Schutzsysteme mit Differentialschutzgeräten sind in Figuren 1 und 2 dargestellt. Figur 1 zeigt zwei parallel zueinander verlaufende Schutzobjekte 10a, 10b in Form von Leitungen eines Energieversorgungsnetzes, die mittels Differentialschutzgeräten 11 auf Fehler überwacht werden. Dazu ist an jedem Ende der beiden Schutzobjekte 10a, 10b ein jeweiliges Differentialschutzgerät 11 vorgesehen, mit dem Messwerte, z.B. Strommesswerte, erfasst werden. Zum Austausch der erfassten Messwerte sind zwischen jeweils zwei Differentialschutzgeräten 11 Übertragungsstrecken 12a, 12b vorgesehen. Jedes Differentialschutzgerät 11 weist eine physikalische Kommunikationsschnittstelle auf, über die die Messwerte in ein Übertragungsmedium, z.B. eine Kupferleitung oder ein Glasfaserkabel, eingekoppelt bzw. daraus empfangen werden. Im Fehlerfall werden Schalteinrichtungen zum Unterbrechen des Fehlerstroms veranlasst. Figur 2 zeigt ein alternatives Schutzsystem, bei dem die Überwachung durch lediglich zwei Differentialschutzgeräte 11 erfolgt. Jedes Differentialschutzgerät 11 ist hierbei zur Überwachung von zwei Schutzobjekten 10a, 10b in Form von Leitungen ausgebildet und kann entsprechend Messwerte an beiden Schutzobjekten 10a, 10b erfassen. Zur Übertragung der Messwerte werden ebenfalls zwei Übertragungsstrecken 12a, 12b genutzt, so dass jedes Differentialschutzgerät 11 entsprechend zwei physikalische Schnittstellen aufweist.

Die Anzahl der Schutzobjekte, die sich mit einem Differentialschutzgerät überwachen lassen, bildet sich somit im Verhältnis 1:1 in der Anzahl der physikalischen Kommunikationsschnittstellen) ab und muss bei Planung und Aufbau eines Schutzsystems berücksichtigt werden. In der Fachwelt wird es bisher als Vorteil angesehen, für jedes Schutzobjekt eine eigene Übertragungsstrecke inklusive der entsprechenden physikalischen Kommunikationsschnittstellen vorzuhalten, da sich das Risiko eines Kommunikationsausfalls damit nur auf ein Schutzobjekt beschränkt. Ein weiterer Aspekt der bisherigen Technik ist die Messung des Gangunterschiedes der Uhren zweier Differentialschutzgeräte über die dedizierte Übertragungsstrecke. Ebenfalls ist die Gesamtübertragungszeit ein wichtiges Kriterium für ein Differentialschutzsystem, da sich die Kommandozeit, die benötigt wird, um den Leistungsschalter zu schalten, z.T. aus der Laufzeit der Messwerte zwischen den Differentialschutzgeräten bildet. Die bisher realisierten Übertragungsraten von z.B. 64 KBit/s erfordern dedizierte Übertragungsstrecken.

Diese Aspekte sprachen in der Vergangenheit, trotz eines hohen Material- und Kostenaufwands, dafür, für jedes Schutzobjekt eine dedizierte Übertragungsstrecke zwischen den Differentialschutzgeräten bereitzustellen.

Aus der US 8,154,836 B2 ist ein Differentialschutzverfahren bekannt, bei dem in einem Differentialschutzsystem mit mehr als zwei Enden für jedes überwachte Schutzobjekt eine dedizierte Übertragungsstrecke verwendet wird.

Ausgehend von einem Differentialschutzgerät der eingangs genannten Art liegt der Erfindung die Aufgabe zugrunde, Aufwand und Kosten für den Aufbau eines Schutzsystems für mehrere Schutzobjekte zu senken.

Zur Lösung dieser Aufgabe wird ein Differentialschutzgerät vorgeschlagen, das dazu eingerichtet ist, gleichzeitig zu dem ersten Schutzobjekt zumindest ein weiteres Schutzobjekt zu überwachen und hinsichtlich jedes weiteren Schutzobjektes jeweilige weitere Messwerte auszutauschen, wobei das Senden und Empfangen aller Messwerte über dieselbe physikalische Kommunikationsschnittstelle (im Folgenden kurz auch als "physikalische Schnittstelle" bezeichnet) erfolgt.

Der erfindungsgemäßen Lösung liegt damit zunächst die Überwindung des in der Fachwelt bestehenden Vorurteils zugrunde, wonach für jedes Schutzobjekt eine eigene Übertragungsstrecke zur Verfügung gestellt werden muss. Erfindungsgemäß weist das Differentialschutzgerät somit lediglich eine physikalische Kommunikationsschnittstelle auf, über die die Messwerte sämtlicher Schutzobjekte übertragen werden. Damit wird die Anzahl der bereitzustellenden Übertragungsstrecken auf eine reduziert, die entsprechend für mehrere Schutzobjekte benutzt wird, so dass Aufwand und Kosten für ein solche Differentialschutzgeräte umfassendes Schutzsystem entsprechend reduziert werden können.

Gemäß einer vorteilhaften Ausführungsform des erfindungsgemäßen Schutzgerätes kann vorgesehen sein, dass auf die physikalische Schnittstelle zumindest zwei logische Kommunikationsschnittstellen (im Folgenden kurz auch als "logische Schnittstellen" bezeichnet) abgebildet werden, wobei für jedes überwachte Schutzobjekt eine eigene logische Schnittstelle bereitgestellt ist, über die die auf das jeweilige überwachte Schutzobjekt bezogenen Messwerte ausgetauscht werden.

Die aus dem Stand der Technik bekannte Bereitstellung physikalischer Schnittstellen wird gemäß dieser Ausführungsform somit durch die Bereitstellung entsprechender logischer Schnittstellen ersetzt. Unter einer logischen Schnittstelle ist in diesem Zusammenhang quasi eine über eine physikalische Schnittstelle separat eingerichtete Schnittstelle zur Ankopplung an einen logischen Übertragungskanal zu verstehen, wobei entsprechend des verwendeten Kommunikationsprotokolls eine separate Datenverbindung zwischen dem Sendegerät und dem Empfangsgerät über die logische Schnittstelle definiert wird. Beispielsweise kann hierzu jeder logischen Schnittstelle eine eigene logische Adresse (z.B. eine MAC-Adresse (Media Access Control = Medienzugangssteuerung) oder eine spezielle Geräteadresse) des Differentialschutzgerätes zugeordnet sein. Somit ergibt sich bei der Verbindung zweier erfindungsgemäßer Differentialschutzgeräte eine Kommunikationsverbindung, die auf physikalischer Ebene aus einer physikalischen Übertragungsstrecke besteht, die über je eine physikalische Schnittstelle mit jedem der Differentialschutzgeräte verbunden ist. Auf logischer Ebene werden von jeder physikalischen Schnittstelle mehrere logische Schnittstellen bereitgestellt. Auf der physikalischen Übertragungsstrecke werden in entsprechender Weise mehrere logische Übertragungskanäle gebildet, wobei jeder logischer Übertragungskanal zwischen zwei logischen Schnittstellen der beteiligten Differentialschutzgeräte ausgebildet ist. Die Anzahl der logischen Schnittstellen entspricht der Anzahl der überwachten Schutzobjekte, so dass für jedes Schutzobjekt ein dedizierter logischer Übertragungskanal bereitgestellt wird.

Durch die Verfügbarkeit spezialisierter Hardware, z.B. in Form von ASICs oder FPGAs, zu geringen Kosten wird auch bei mit mehreren logischen Schnittstellen ausgebildeten physikalischen Schnittstellen eine ausreichend schnelle Datenübertragung ermöglicht.

Konkret kann vorgesehen sein, dass die Messeinrichtung die Messwerte in Form von Stromzeigern erfasst, die Amplitude und Phasenwinkel der an dem Ende der jeweiligen Leitung fließenden Ströme angeben.

Bei der Verwendung von Stromzeigern werden die Differenzwerte üblicherweise durch vektorielle Addition und anschließende Betragsbildung aus zueinander gehörenden Stromzeigermesswerten bestimmt.

Eine weitere vorteilhafte Ausführungsform des erfindungsgemäßen Differentialschutzgerätes sieht vor, dass die Messeinrichtung einen lokalen Zeitgeber aufweist und den Messwerten jeweils einen den Zeitpunkt ihrer Erfassung angebenden Zeitstempel zuordnet.

Der Zeitgeber kann beispielsweise in die physikalische Schnittstelle integriert sein, was sich insbesondere bei Ausbildung der physikalischen Schnittstelle in Form eines FPGAs oder ASICs vorteilhaft realisieren lässt. Allerdings ist auch eine separate Ausgestaltung möglich.

Gemäß einer weiteren vorteilhaften Ausführungsform des erfindungsgemäßen Differentialschutzgeräts kann vorgesehen sein, dass das Differentialschutzgerät dazu eingerichtet ist, andere Differentialschutzgeräte, die mit ihm über die Kommunikationsverbindung verbunden sind, automatisch zu erkennen und jedem überwachten Schutzobjekt das jeweilige zugehörige Differentialschutzgerät zuzuordnen.

Auf diese Weise kann insbesondere bei Schutzsystemen mit einer Vielzahl von Schutzobjekten eine einfache Konfiguration der Kommunikationsverbindungen ermöglicht werden. Hierfür ist die Kenntnis der vorhandenen anderen Differentialschutzgeräte notwendig. Bei einer automatischen Erkennung der Differentialschutzgeräte und einer entsprechenden Zuordnung zu den jeweiligen Schutzobjekten kann ein hoher manueller Aufwand für die Konfiguration vermieden werden.

Konkret kann in diesem Zusammengang vorgesehen sein, dass das Differentialschutzgerät dazu eingerichtet ist, bei einem Verbindungsaufbau mit einem anderen Differentialschutzgerät, Identifikationsdaten auszutauschen, die eine Zuordnung des jeweiligen Differentialschutzgerätes zu einem jeweiligen überwachten Schutzobjekt ermöglichen.

Solche Identifikationsdaten können beispielsweise bei der Inbetriebnahme des Schutzsystems ausgetauscht werden. Neben einer Identifikation des jeweiligen Differentialschutzgerätes umfassen sie zudem eine Angabe, welchem Schutzobjekt bzw. welchen Schutzobjekten das Differentialschutzgerät zugeordnet ist.

Daneben oder zusätzlich kann in diesem Zusammenhang vorgesehen sein, dass das Differentialschutzgerät dazu eingerichtet ist, die automatische Erkennung und/oder Zuordnung eines anderen Differentialschutzgerätes anhand einer gemäß dem Standard IEC 61850 gebildeten Konfigurationsdatei vorzunehmen.

Der Standard IEC 61850 stellt einem im Bereich der Automatisierung von Energieversorgungsnetzen etablierten Standard dar, der neben einer ausführlichen Datenmodellierung die Art der Kommunikation zwischen einzelnen Geräten regelt. Zu diesem Zweck werden Konfigurationsdateien definiert, die Angaben über einzelne Geräte (ICD - Intelligent electronic device configuration description) und/oder eine gesamt Anlage (SCD - Substation configuration description) beinhalten. Solche Konfigurationsdateien ermöglichen mithin die Identifikation einzelner Differentialschutzgeräte und ihre Zuordnung zu jeweiligen Schutzobjekten.

Die oben genannte Aufgabe wird auch durch ein Schutzsystem zur Überwachung von zumindest zwei Schutzobjekten eines Energieversorgungsnetzes mit zumindest zwei Differentialschutzgeräten gelöst, von denen mindestens ein Differentialschutzgerät nach einem der Ansprüche 1 - 7 ausgebildet ist. Je nach Topologie und Anordnung der überwachten Schutzobjekte kann der Einsatz eines oder mehrerer entsprechend ausgebildeter Differentialschutzgeräte erforderlich sein. Solche Differentialschutzgeräte, die lediglich ein Schutzobjekt überwachen, können dabei in herkömmlicher Weise ausgebildet sein, da sie ohnehin an nur eine Übertragungsstrecke angebunden sind.

Konkret kann hierbei vorgesehen sein, dass das Schutzsystem zur Überwachung von mindestens zwei Schutzobjekten ausgebildet ist, die parallel zueinander angeordnet sind, wobei jeweils ein Differentialschutzgerät gemäß einem der Ansprüche 1 - 7 an den jeweiligen Enden der beiden parallelen Schutzobjekte angeordnet ist.

Hinsichtlich des erfindungsgemäßen Schutzsystems gelten alle zu dem erfindungsgemäßen Differentialschutzgerät voranstehend und nachfolgend gemachten Ausführungen und umgekehrt in entsprechender Weise. Auch hinsichtlich der Vorteile des erfindungsgemäßen Schutzsystems wird auf die zu dem erfindungsgemäßen Differentialschutzgerät beschriebenen Vorteile verwiesen.

Häufig treten solche Topologien bei der Überwachung von Parallelleitungen in einem Energieübertragungsnetz auf. In diesem Fall wird pro Leitungsende ein Differentialschutzgerät zur Überwachung beider Leitungen nötig. Die beiden Differentialschutzgeräte sind über eine einzige physikalische Übertragungsstrecke miteinander verbunden und weisen daher diesbezüglich jeweils nur eine entsprechende physikalische Schnittstelle auf.

Es ist hierbei möglich, dass mehr als zwei Schutzobjekte parallel zueinander angeordnet sind und die Differentialschutzgeräte entsprechend mehr als zwei Schutzobjekte gleichzeitig überwachen. Außerdem kann ein Schutzsystem mehrere solcher Parallelstrukturen aufweisen, an deren Enden jeweils ein entsprechendes Differentialschutzgerät angeordnet ist.

Eine andere vorteilhafte Ausführungsform des erfindungsgemäßen Schutzsystems sieht schließlich vor, dass das Schutzsystem zur Überwachung von mindestens zwei Schutzobjekten ausgebildet ist, die aneinandergrenzen, wobei an denjenigen Enden der beiden aneinandergrenzenden Schutzobjekte ein Differentialschutzgerät gemäß einem der Ansprüche 1 - 7 angeordnet ist.

Bei dieser Ausführungsform übernimmt mindestens eines der Differentialschutzgeräte somit die Überwachung zweier Schutzobjekte, z.B. zweier aneinander anschließender Leitungen, und kann somit zwei Übertragungsstrecken über eine einzige physikalische Schnittstelle realisieren.

Auch bei dieser Ausführungsform besteht die Möglichkeit, dass mehr als zwei Schutzobjekte aneinandergrenzen und von einem Differentialschutzgerät entsprechend mehr als zwei Schutzobjekte überwacht werden. Auch eine Kombination aus einer Topologie mit aneinandergrenzenden und parallel verlaufenden Schutzobjekten ist möglich.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Differentialschutzgerätes bzw. des erfindungsgemäßen Schutzsystems in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen
- Figur 1: ein erstes Ausführungsbeispiel eines Schutzsystems nach dem Stand der Technik;
- Figur 2: ein zweites Ausführungsbeispiel eines Schutzsystems nach dem Stand der Technik;
- Figur 3: ein Schutzsystem zur allgemeinen Erläuterung eines Differentialschutzverfahrens;
- Figur 4: eine schematische Ansicht eines Differentialschutzgerätes zur Überwachung mehrerer Schutzobjekte;
- Figur 5: ein Ausführungsbeispiel eines Schutzsystems mit parallel angeordneten Schutzobjekten; und
- Figur 6: ein Ausführungsbeispiel eines Schutzsystems mit aneinandergrenzend angeordneten Schutzobjekten.

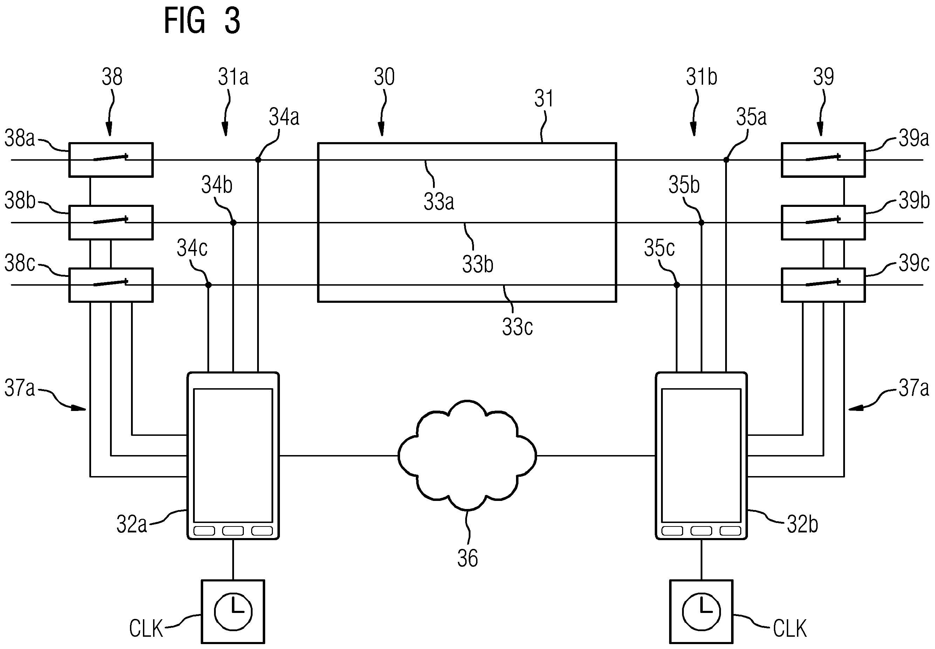

Zunächst soll allgemein auf die Prinzipien des Differentialschutzes eingegangen werden. Hierzu zeigt Figur 3 einen Teil 30 eines im Weiteren nicht näher dargestellten elektrischen Energieversorgungsnetzes. Der Teil 30 umfasst ein Schutzobjekt in Form einer eine dreiphasigen Leitung 31, die beispielsweise als Freileitung oder als Kabel ausgebildet sein kann. Die Leitung 31 wird an ihrem ersten Ende 31a mittels eines ersten Differentialschutzgerätes 32a und an ihrem zweiten Ende 31b mittels eines zweiten Differentialschutzgerätes 32b hinsichtlich auf der Leitung auftretender Fehler, z.B. Kurzschlüsse, überwacht. Hierfür werden für jede Phase 33a-c der Leitung 31 mit ersten Stromwandlern 34a-c an einer ersten Messstelle an dem ersten Ende 31a der Leitung 31 und zweiten Stromwandlern 35a-c an einer zweiten Messstelle an dem zweiten Ende 31b der Leitung 31 Stromsignale erfasst und einer jeweiligen Messeinrichtung der Differentialschutzgeräte 32a, 32b zugeführt. Aus den analogen Stromsignalen werden z.B. Stromzeigermesswerte erzeugt, die eine Angabe von Amplitude und Phasenwinkel des Stromsignals zum Erfassungszeitpunkt angeben. Die Erzeugung der Stromzeigermesswerte inklusive einer A/D-Wandlung kann in der Messeinrichtung des jeweiligen Differentialschutzgerätes 32a, 32b, in den Stromwandlern selbst oder in einem geeigneten zwischengeschalteten Messgerät (in Figur 3 nicht dargestellt), z.B. einer Phasor Measurement Unit (PMU), einer Remote Terminal Unit (RTU) oder einer Merging Unit, erfolgen. Letztlich werden die erzeugten Stromzeigermesswerte einer Auswerteeinrichtung, z.B. einer CPU und/oder einem Signalprozessor, des jeweiligen Differentialschutzgerätes 32a, 32b zugeführt.

Die Differentialschutzgeräte 32a bzw. 32b sind durch eine in Figur 3 nur schematisch angedeutete Kommunikationsverbindung 36 miteinander verbunden, bei der es sich z.B. um eine Kupferkabelleitung, eine Glasfaserleitung, ein IP-basiertes Kommunikationsnetz oder ein Telekommunikationsnetz handeln kann. Allerdings kann auch jede weitere Kommunikationsverbindung beliebiger Art zur Verbindung der Differentialschutzgeräte 32a und 32b eingesetzt werden. Über diese Kommunikationsverbindung 36 können dem jeweiligen Differentialschutzgerät 32a bzw. 32b die Stromzeigermesswerte vom jeweils anderen Ende 31a, 31b der Leitung 31 zur Verfügung gestellt werden, das heißt, es können in jedem Differentialschutzgerät 32a bzw. 32b für jede Phase 33a, 33b, 33c der Leitung 31 jeweils Paare aus an beiden Enden 31a und 31b aufgenommenen Stromzeigermesswerten gebildet werden.

Anhand der in beiden Differentialschutzgeräten 32a und 32b verfügbaren Strommesswerte von beiden Enden 31a und 31b der Leitung 31 kann in einem oder beiden Differentialschutzgeräten 32a bzw. 32b mittels der Auswerteeinrichtung durch vektorielle Addition der Stromzeigermesswerte und anschließende Betragsbildung pro Phase ein Differenzstromwert gebildet und mit einem Schwellenwert verglichen werden.

Bei fehlerfreier Leitung 31 ist der pro Phase in die Leitung 31 eintretende Strom (nahezu) gleich dem aus der Leitung 31 austretenden Strom, so dass sich bei vektorieller Addition der Stromzeigermesswerte ein Zeiger mit dem Betrag von etwa Null ergeben müsste. In der Realität wird der Differenzstromwert jedoch meist einen Wert ungleich Null annehmen, er wird aber unterhalb eines vorgegebenen Schwellenwertes liegen. Dies ist beispielsweise auf einen kapazitiven Ladestrom auf der überwachten Leitung zurückzuführen, der bewirkt, dass der Differenzstromwert auch im fehlerfreien Falle quasi nie dauerhaft exakt den Wert Null annimmt. Daneben können auch beispielsweise Wandlerungenauigkeiten und Messfehler zu diesem Effekt beitragen. Der vorgegebene Schwellenwert kann entweder statisch oder dynamisch, beispielsweise an die Höhe der jeweiligen Phasenströme angepasst, festgelegt werden.

Der Schwellenwert kann als separater Parameter festgelegt sein. Es kann jedoch auch vorgesehen sein, eine Schwellenwertüberschreitung durch Auswertung der Lage eines Messwertpaares aus dem Differenzstromwert und einem zugehörigen Stabilisierungswert in einem Auslösediagramm zu prüfen. Hierzu werden aus zusammengehörenden, d.h. gleichzeitig erfassten, Stromzeigermesswerten Differenzstromwerte und zugehörige Stabilisierungswerte gebildet und die Lage des aus einem Differenzstromwert und einem Stabilisierungswert bestehenden Messwertpaares in dem Auslösediagramm geprüft. Liegt das Messwertpaar innerhalb eines Auslösebereichs, wird auf einen Fehler hinschlicht der überwachten Leitung geschlossen und das Fehlersignal erzeugt.

Überschreitet für eine bestimmte Phase der Differenzstromwert den vorgegebenen Schwellenwert, so weist dies auf einen Fehler hinsichtlich der betreffenden Phase der Leitung 31 hin, bei dem es sich beispielsweise um einen Kurzschluss mit Erdbeteiligung oder einen zwei- oder mehrpoligen Kurzschluss, d.h. einen Kurzschluss zwischen zwei oder mehr Phasen der Primärkomponente, handeln kann. Für diejenige Phase, bei der der Fehler erkannt worden ist, erzeugen die Differentialschutzgeräte 32a und 32b ein Fehlersignal, wodurch die Abgabe eines Auslösesignals über Steuerleitungen 37a, 37b an phasenselektiv schaltbare Leistungsschalter 38 bzw. 39 bewirkt wird. Das Auslösesignal veranlasst den entsprechenden phasenbezogenen Leistungsschalter 38a, 38b, 38c bzw. 39a, 39b, 39c zum Öffnen seiner Schaltkontakte, so dass die von dem Fehler betroffene Phase 33a, 33b, 33c vom restlichen Energieversorgungsnetz abgetrennt wird.

Liegt beispielsweise auf der Phase 33b ein Kurzschluss mit Erdbeteiligung vor, so erkennen die Differentialschutzgeräte 32a bzw. 32b dies anhand eines den jeweiligen Schwellenwert übersteigenden Differenzstromwertes und geben Auslösesignale an die phasenbezogenen Leistungsschalter 38b bzw. 39b ab, um die Phase 33b der Leitung 31 von dem Energieversorgungsnetz abzutrennen.

Obwohl gemäß Figur 3 eine dreiphasige Leitung 31 mit lediglich zwei Enden 31a bzw. 31b gezeigt ist, kann das erfindungsgemäße Verfahren auch bei beliebigen ein- oder mehrphasigen Schutzobjekten mit zwei oder mehr Enden, beispielsweise elektrischen Sammelschienen mit mehreren Abzweigen, eingesetzt werden.

Um den Differenzstromwert korrekt ermitteln zu können, ist es notwendig, dass die zu seiner Bildung verwendeten Stromzeigermesswerte tatsächlich gleichzeitig an den Enden 31a, 31b der Leitung 31 erfasst worden sind. Üblicherweise stellt sich jedoch, insbesondere bei der Übertragung der Stromzeigermesswerte über eine vergleichsweise lange Kommunikationsstrecke, eine zeitliche Verzögerung ein, so dass der lokal erfasste Stromzeigermesswert nicht ohne weiteres einem an einem entfernten Ende erfassten und übertragenen Stromzeigermesswert verknüpft werden kann. Bei Verwendung nicht gleichzeitig erfasster Stromzeigermesswerte können sich auch bei eigentlich fehlerfreier Leitung Differenzstromwerte ergeben, die den Schwellenwert überschreiten und damit zur Abgabe eines Fehlersignals führen würden.

Zur zeitlichen Zuordnung der Stromzeigermesswerte werden diese daher üblicherweise mit einer Markierung in Form eines Zeitstempels versehen, der den Zeitpunkt ihrer Erfassung angibt. Durch Auswahl derjenigen Stromzeigermesswerte von unterschiedlichen Enden der Leitung, die einen zueinander passenden Zeitstempel aufweisen, kann sichergestellt werden, dass der Differenzstromwert korrekt berechnet wird. Diese Vorgehensweise setzt jedoch voraus, dass die zur Erfassung der Stromzeigermesswerte verwendeten Messeinrichtungen jeweils lokale Uhren bzw. Zeitgeber (CLK) aufweisen, die miteinander synchronisiert sind oder zumindest einen bekannten Zeitversatz aufweisen. Um dies zu erreichen, findet eine kontinuierliche Ermittlung eines etwaigen Zeitversatzes zwischen den Zeitgebern (CLK) der jeweiligen Messeinrichtungen statt, der entweder zur Nachjustierung eines Zeitgebers (CLK) oder von der Auswerteeinrichtung der Differentialschutzgeräte zur zeitlichen Zuordnung der Stromzeigermesswerte verwendet wird. Im letztgenannten Fall muss zur zeitlichen Zuordnung der Stromzeigermesswerte der ermittelte Zeitversatz von dem Zeitstempel des Stromzeigermesswertes derjenigen Messeinrichtung abgezogen werden, die den Zeitgeber mit der im Vergleich zum anderen Zeitgeber (CLK) vorgehenden Uhrzeit aufweist.

Um den Zeitversatz zwischen den Zeitgebern (CLK) der Messeinrichtungen zu ermitteln, kann ein laufzeitbasiertes Synchronisationsverfahren, z.B. das sogenannte "Ping-Pong-Verfahren" eingesetzt werden. Dabei wird diejenige Zeitdauer gemessen, die benötigt wird, um über die Übertragungsstrecke zwischen den beiden Messeinrichtungen ein erstes Telegramm in die eine Richtung und anschließend ein zweites Telegramm in die andere Richtung zu übertragen. Die übertragenen Telegramme weisen jeweils einen Zeitstempel auf, der den Zeitpunkt ihres Versendens angibt. Außerdem halten die Messeinrichtungen den Empfangszeitpunkt des jeweiligen Telegramms fest. Anhand der Zeitstempel kann die Zeitdauer für die reine Übertragung der Telegramme (ohne etwaige Zeitverzögerungen zwischen dem Empfang des ersten Telegramms und dem Versenden des zweiten Telegramms) ermittelt werden. Die ermittelte Zeitdauer wird halbiert und ergibt die Laufzeit auf der Kommunikationsstrecke für ein in eine Übertragungsrichtung übertragenes Telegramm. Anhand der mit den Telegrammen übertragenen Zeitstempel sowie den Empfangszeitpunkten und der nunmehr bekannten Laufzeit können die Messeinrichtungen den Zeitversatz zwischen den Zeitgebern (CLK) der Messeinrichtungen bestimmen. Weitere Details zum Ping-Pong-Verfahren finden sich in der eingangs genannten US 8,154,836 B2.

Neben oder zusätzlich zu dem laufzeitbasierten Synchronisationsverfahren kann auch eine externe Synchronisierung der Zeitgeber CLK, beispielsweise über ein GPS-Signal oder ein PTP Verfahren gemäß IEEE 1588 erfolgen.

Bei dem beispielhaft dargestellten Schutzsystem der Figur 3 wird von den Differentialschutzgeräten lediglich ein einziges Schutzobjekt überwacht, so dass zum Austausch der Stromzeigermesswerte zwischen den Differentialschutzgeräten 32a, 32b eine Kommunikationsverbindung in Form einer einzigen physikalischen Übertragungsstrecke ausreichend ist. Jedes der Differentialschutzgeräte 32a, 32b ist zu diesem Zweck über eine physikalische Schnittstelle mit der Kommunikationsverbindung 16 verbunden.

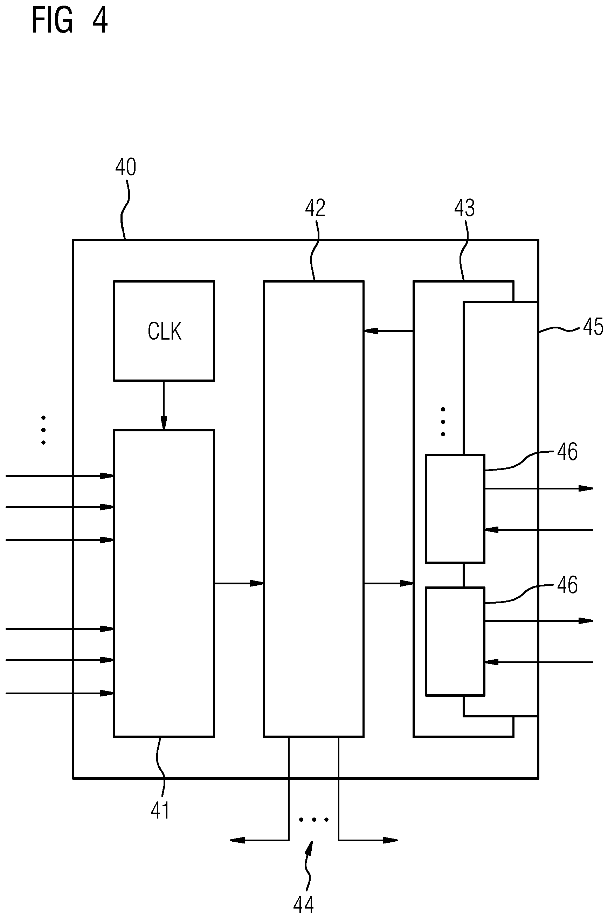

Sobald die Differentialschutzgeräte des Schutzsystems zur gleichzeitigen Überwachung mehrerer Schutzobjekte ausgebildet sind, sind neben mess- und verarbeitungstechnischen Veränderungen auch hinsichtlich der Kommunikation Anpassungen vorzunehmen. Diese werden in Figur 4 näher erläutert.

Hierzu zeigt Figur 4 ein Ausführungsbeispiel eines Differentialschutzgeräts 40 in schematischer Ansicht. Das Differentialschutzgerät 40 weist eine Messeinrichtung 41, eine Auswerteinrichtung 42 und eine Kommunikationseinrichtung 43 auf. Der Messeinrichtung 41 werden über in Figur 4 nicht gezeigte externe Sensoren (z.B. Stromwandler) Messsignale zugeführt, die den an einem jeweiligen Ende eines Schutzobjektes fließenden Strom angeben. Dabei kann es sich um Strom- oder Ladungssignale handeln. Mit der Messeinrichtung findet eine Vorverarbeitung der Messsignale, z.B. ein Form einer Filterung und einer A-D-Wandlung unter Bildung von Messwerten statt. Außerdem kann eine Zeitstempelung der Messwerte anhand eines von einem Zeitgeber CLK bereitgestellten Zeitsignals erfolgen. Die beschriebene Messwerterfassung findet für zumindest zwei Schutzobjekte statt, so dass für jedes Schutzobjekt lokale Messwerte vorliegen. Schließlich werden die Messwerte der Auswerteeinrichtung 42 zugeführt.

Die lokal erfassten Messwerte werden außerdem über die Kommunikationseinrichtung 43 an zumindest ein an einem anderen Ende der Schutzobjekte angeordnetes Differentialschutzgerät übertragen. Außerdem werden mit der Kommunikationseinrichtung 43 von dem zumindest einen anderen Differentialschutzgerät gesendete zeitgestempelte Messwerte empfangen, die an den anderen Enden der Schutzobjekte fließende Ströme angeben. Diese Messwerte werden ebenfalls der Auswerteeinrichtung 42 zugeführt.

Die Auswerteeinrichtung 42 führt das im Zusammenhang von Figur 3 beschriebene Differentialschutzverfahren für jedes der mit dem Differentialschutzgerät 40 überwachten Schutzobjekte durch und berechnet dabei für jedes der Schutzobjekte entsprechende Differenzwerte. Wird ein Fehler erkannt, so werden über Steuerausgänge 44 Auslösesignale an entsprechende Leistungsschalter abgegeben um den Stromfluss durch das fehlerbehaftete Schutzobjekt abzuschalten.

Die Kommunikationseinrichtung 43 ist zum Austausch der Messwerte derart ausgebildet, dass über eine einzige physikalische Schnittstelle 45, bei der es sich z.B. um eine serielle Schnittstelle oder eine optische oder elektrische Ethernet-Schnittstelle handeln kann, die Messwerte aller von dem Differentialschutzgerät 40 überwachten Schutzobjekte übertragen werden können. Dazu implementiert die physikalische Schnittstelle mehrere logische Schnittstellen 46, deren Anzahl der Anzahl der überwachten Schutzobjekte entspricht. Die logischen Schnittstellen sind zur Ausbildung eigenständiger logischer Datenverbindungen mit entsprechenden logischen Schnittstellen je eines anderen Differentialschutzgerätes ausgebildet und weisen zu diesem Zweck eigene Adressen (z.B. MAC-Adressen oder logische Geräteadressen) auf. Über jede der logischen Schnittstellen wird das Differentialschutzgerät somit an je einen dedizierten logischen Übertragungskanal angeschlossen, über den die für das entsprechende Schutzobjekt erfassten Messwerte ausgetauscht werden. Dazu werden jeweils Datentelegramme gebildet, die an die jeweilige Adresse der logischen Schnittstelle desjenigen Differentialschutzgerätes gesendet werden, an das sie gerichtet sind. In umgekehrter Weise empfängt jede logische Schnittstelle Datentelegramme, die an ihre jeweilige Adresse gerichtet sind.

Die Kommunikationseinrichtung 43 kann beispielsweise in Form eines FPGAs oder eines ASICs ausgebildet sein. Solche Rechenbausteine mit spezialisierter hardwarebasierter Programmierung weisen eine hohe Rechenleistung auf und können die notwendige Bandbreite für die Übertragung der Messwerte über mehrere logische Schnittstellen bereitstellen.

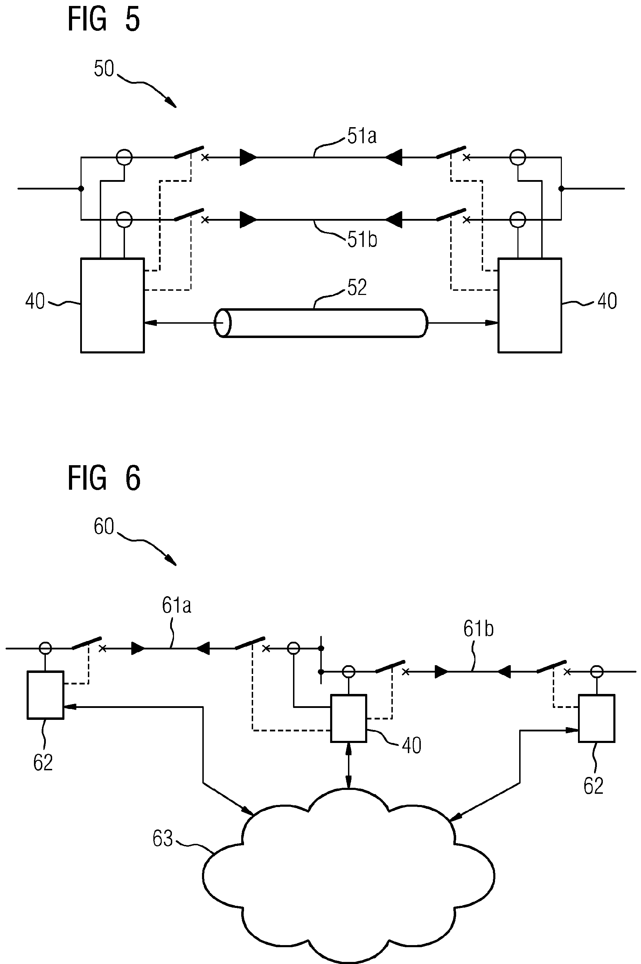

In Figuren 5 und 6 sind beispielhafte Topologien von Schutzsystemen dargestellt, bei denen die Erfindung vorteilhaft eingesetzt werden kann.

Figur 5 zeigt ein Schutzsystem 50 mit zwei parallel zueinander angeordneten Schutzobjekten 51a, 51b in Form von Leitungen. An den Enden der beiden Schutzobjekte 51a, 51b ist jeweils ein Differentialschutzgerät 40 angeordnet. Diese Differentialschutzgeräte 40 sind damit jeweils zur Überwachung von zwei Schutzobjekten ausgebildet und weisen je eine Kommunikationseinrichtung auf, die zur Übertragung der Messwerte jeweils eine einzelne physikalische Schnittstelle aufweisen. In der jeweiligen physikalischen Schnittstelle sind jeweils zwei logische Schnittstellen ausgebildet, von denen je eine einem der beiden Schutzobjekte zugeordnet ist und zur Übertragung der diesbezüglichen Messwerte dient. Damit wird eine einzelne physikalische Übertragungsstrecke 52 ausgebildet, über die zwei logische Übertragungskanäle verlaufen.

Figur 6 zeigt schließlich ein Schutzsystem 60 mit zwei aneinandergrenzenden Schutzobjekten 61a, 61b in Form von Leitungen. Die Schutzobjekte 61a, 61b werden an ihren Enden jeweils von Differentialschutzgeräten begrenzt, wobei dasjenige Differentialschutzgerät 40, das an der Stelle angeordnet ist, an der die Schutzobjekte 61a, 61b aneinandergrenzen, entsprechend zur Überwachung von zwei Schutzobjekten ausgebildet ist. An den anderen Enden der Schutzobjekte 61a, 62b können Differentialschutzgeräte 62 angeordnet sein, die lediglich zur Überwachung eines einzelnen Schutzobjektes ausgebildet sind. Natürlich können an diesen Stelle auch Differentialschutzgeräte angeordnet sein, die zur Überwachung mehrerer Schutzobjekte ausgebildet sind, um ggf. für zukünftige Netzerweiterungen vorbereitet zu sein.

Das Differentialschutzgerät 40 weist zur Übertragung der Messwerte eine einzelne physikalische Schnittstelle auf, die an eine physikalische Übertragungsstrecke 63 angeschlossen ist, die z.B. als Netzwerk oder als Datenbus ausgebildet sein kann. In der physikalischen Schnittstelle sind zwei logische Schnittstellen ausgebildet, von denen je eine einem der beiden Schutzobjekte zugeordnet ist und zur Übertragung der diesbezüglichen Messwerte dient. Damit wird auch in diesem Ausführungsbeispiel eine einzelne physikalische Übertragungsstrecke 63 ausgebildet, über die zwei logische Übertragungskanäle verlaufen, nämlich je einer zwischen dem Differentialschutzgerät 40 und jedem der Differentialschutzgeräte 62.

Neben den beispielhaft in Figuren 5 und 6 gezeigten Topologien können natürlich auch andere Topologien, bei denen einzelne oder alle Differentialschutzgeräte zur Überwachung mehrerer Schutzobjekte dienen, zum Einsatz kommen.

Zur Konfigurierung der logischen Schnittstellen kann vorgesehen sein, dass die Differentialschutzgeräte eine automatische Erkennung durchführen, mit welchen anderen Differentialschutzgeräten sie jeweils verbunden sind und welchem Schutzobjekt welches Differentialschutzgerät zugeordnet ist. Hierfür können beispielsweise Identifikationsinformationen ausgetauscht werden, die einerseits zur Identifizierung des jeweiligen Differentialschutzgerätes dienen und andererseits einen Angabe über das jeweils überwachte Schutzobjekt bzw. die jeweils überwachten Schutzobjekte beinhalten. Auch können die Identifikationsinformationen Adressen der den jeweiligen Schutzobjekten zugeordneten logischen Schnittstellen beinhalten. Mit diesen Informationen können die jeweiligen Differentialschutzgeräte die Konfigurierung der jeweiligen logischen Schnittstellen durchführen. Während dieser Konfigurierung werden insbesondere die Adressen festgelegt, an die die für ein jeweiliges Schutzobjekt erfassten Messwerte gesendet werden sollen. Auch wird festgelegt, welchem Schutzobjekt über eine bestimmte logische Schnittstelle empfangene Messwerte zuzuordnen sind, um das Differentialschutzverfahren durchzuführen.

Die Konfigurierung der logischen Schnittstellen kann hierbei auch auf der Basis von Konfigurationsdateien durchgeführt werden, die entsprechend dem Standard IEC 61850 ausgebildet sind. Solche Konfigurationsdateien, wie z.B. eine SCD oder eine ICD, geben üblicherweise eine Zuordnung von Gerätefunktionen zu einzelnen Schutzobjekten sowie die benötigten Adressen und Identifikationsinformationen an.

Nach der erfolgreichen Konfiguration der logischen Schnittstellen sind auf den physikalischen Übertragungsstrecken die notwendigen logischen Übertragungskanäle etabliert, über die die für die Überwachung erforderlichen Messwerte zwischen den einzelnen Differentialschutzgeräten ausgetauscht werden.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

## Patentansprüche

1. Differentialschutzgerät (40) zum Überwachen eines ersten Schutzobjektes (51a, 61a) eines elektrischen Energieversorgungsnetzes, mit
- einer Messeinrichtung (41), die dazu eingerichtet ist, an einem Ende des ersten Schutzobjektes (51a, 61a) Messwerte zu erfassen, die den an dem Ende fließenden Strom angeben;
- einer Kommunikationseinrichtung (43), die dazu eingerichtet ist, mit einem an einem anderen Ende des ersten Schutzobjektes (51a, 61a) angeordneten Differentialschutzgerät Messwerte auszutauschen, wobei die Kommunikationseinrichtung (43) eine physikalische Schnittstelle (45) zum Senden und Empfangen der Messwerte aufweist; und
- einer Auswerteeinrichtung (42), die dazu eingerichtet ist, mit einander zugeordneten Messwerten von beiden Enden des ersten Schutzobjektes (51a, 61a) einen Differenzwert zu bilden und ein einen Fehler hinsichtlich des ersten Schutzobjektes (51a, 61a) angebendes Fehlersignal zu erzeugen, wenn der Differenzwert einen vorgegebenen Schwellenwert überschreitet;
**dadurch gekennzeichnet, dass**
- das Differentialschutzgerät (40) dazu eingerichtet ist, gleichzeitig zum ersten Schutzobjekt (51a, 61a) zumindest eins weiteres Schutzobjekt (51b, 61b) zu überwachen und hinsichtlich jedes weiteren Schutzobjektes (51b, 61b) jeweilige weitere Messwerte auszutauschen, wobei das Senden und Empfangen aller Messwerte über dieselbe physikalische Schnittstelle (45) erfolgt.

2. Differentialschutzgerät (40) nach Anspruch 1,
**dadurch gekennzeichnet, dass**
- mittels der physikalischen Schnittstelle (45) zumindest zwei logische Schnittstellen (45) ausgebildet sind, wobei für jedes überwachte Schutzobjekt (51a, 51b, 61a, 61b) eine eigene logische Schnittstelle (45) bereitgestellt ist, über die die auf das jeweilige überwachte Schutzobjekt (51a, 51b, 61a, 61b) bezogenen Messwerte ausgetauscht werden.

3. Differentialschutzgerät (40) nach Anspruch 1 oder 2,
**dadurch gekennzeichnet, dass**
- die Messeinrichtung (41) die Messwerte in Form von Stromzeigern erfasst, die Amplitude und Phasenwinkel der an dem Ende des jeweiligen Schutzobjektes (51a, 51b, 61a, 61b) fließenden Ströme angeben.

4. Differentialschutzgerät (40) nach einem der vorangehenden Ansprüche,
**dadurch gekennzeichnet, dass**
- die Messeinrichtung (41) einen lokalen Zeitgeber (CLK) aufweist und den Messwerten jeweils einen den Zeitpunkt ihrer Erfassung angebenden Zeitstempel zuordnet.

5. Differentialschutzgerät (40) nach einem der vorangehenden Ansprüche,
**dadurch gekennzeichnet, dass**
- das Differentialschutzgerät (40) dazu eingerichtet ist, andere Differentialschutzgeräte, die mit ihm über die Kommunikationsverbindung verbunden sind, automatisch zu erkennen und jedem überwachten Schutzobjekt (51a, 51b, 61a, 61b) das jeweilige zugehörige Differentialschutzgerät zuzuordnen.

6. Differentialschutzgerät (40) nach Anspruch 5,
**dadurch gekennzeichnet, dass**
- das Differentialschutzgerät (40) dazu eingerichtet ist, bei einem Verbindungsaufbau mit einem anderen Differentialschutzgerät, Identifikationsdaten auszutauschen, die eine Zuordnung des jeweiligen Differentialschutzgerätes zu einem jeweiligen überwachten Schutzobjekt (51a, 51b, 61a, 61b) ermöglichen.

7. Differentialschutzgerät (40) nach Anspruch 5 oder 6,
**dadurch gekennzeichnet, dass**
- das Differentialschutzgerät (40) dazu eingerichtet ist, die automatische Erkennung und/oder Zuordnung eines anderen Differentialschutzgerätes anhand einer gemäß dem Standard IEC 61850 gebildeten Konfigurationsdatei vorzunehmen.

8. Schutzsystem (50, 60) zur Überwachung von zumindest zwei Schutzobjekten (51a, 51b, 61a, 61b) eines Energieversorgungsnetzes mit zumindest zwei Differentialschutzgeräten, von denen mindestens ein Differentialschutzgerät (40) nach einem der Ansprüche 1 - 7 ausgebildet ist.

9. Schutzsystem (50, 60) nach Anspruch 8,
**dadurch gekennzeichnet, dass**
- das Schutzsystem (50, 60) zur Überwachung von mindestens zwei Schutzobjekten (51a, 51b, 61a, 61b) ausgebildet ist, die parallel zueinander angeordnet sind, wobei jeweils ein Differentialschutzgerät (40) gemäß einem der Ansprüche 1 - 7 an den jeweiligen Enden der beiden parallelen Schutzobjekte (51a, 51b) angeordnet ist.

10. Schutzsystem (50, 60) nach Anspruch 8 oder 9,
- das Schutzsystem (50, 60) zur Überwachung von mindestens zwei Schutzobjekten (51a, 51b, 61a, 61b) ausgebildet ist, die aneinandergrenzen, wobei an denjenigen Enden der beiden aneinandergrenzenden Schutzobjekte (51a, 51b, 61a, 61b) ein Differentialschutzgerät (40) gemäß einem der Ansprüche 1 - 7 angeordnet ist.
